Europäisches Patentamt

**European Patent Office**

Office européen des brevets

(19)

(11) Numéro de publication: **0 020 189**
**B1**

(12) **FASCICULE DE BREVET EUROPEEN**

(45) Date de publication du fascicule du brevet: **21.12.83**

(51) Int. Cl.³: **G 02 B 5/16**

(21) Numéro de dépôt: **80400491.9**

(22) Date de dépôt: **14.04.80**

(54) Dispositif de fabrication d'éléments de câblage comportant des fibres optiques.

(30) Priorité: **30.05.79 FR 7913754**

(43) Date de publication de la demande:
**10.12.80 Bulletin 80/25**

(45) Mention de la délivrance du brevet:
**21.12.83 Bulletin 83/51**

(84) Etats contractants désignés:
**BE CH DE GB IT LI NL**

(56) Documents cités:
**EP - A - 0 003 930**
**FR - A - 1 234 874**
**FR - A - 2 388 930**
**FR - A - 2 388 931**
**GB - A - 1 544 690**
**US - A - 4 154 049**

(73) Titulaire: **LIGNES TELEGRAPHIQUES ET TELEPHONIQUES L.T.T.**
**1, rue Charles Bourseul**
**F-78702 Conflans Ste Honorine (FR)**

(72) Inventeur: **Hulin, Jean-Pierre**
**"THOMSON-CSF"-SCPI 173, bld Haussmann**
**F-75360 Paris Cedex 08 (FR)**

(74) Mandataire: **Benoit, Monique et al,**
**THOMSON-CSF SCPI 173, Bld Haussmann**
**F-75379 Paris Cedex 08 (FR)**

Courier Press, Leamington Spa, England.

# Dispositif de fabrication d'éléments de câblage comportant des fibres optiques

La présente invention concerne la fabrication d'éléments de câblage, comportant une âme rigide entourée d'un revêtement diélectrique à rainures hélicoïdales à pas simple ou alterné, des fibres optiques étant placées librement dans ces rainures; l'invention a plus particulièrement pour objet un dispositif de mise en place des fibres optiques dans les rainures.

La pose simultanée d'une fibre optique dans chacune des rainures d'une structure telle que mentionnée ci-dessus, de forme générale cylindrique, du type décrit notamment dans le brevet français n° 2 358 666 déposé par la Société LIGNES TELEGRAPHIQUES ET TELEPHONIQUES le 30 décembre 1975 et la demande de brevet français publiée sous le n° 2 381 326, déposée par la Société LIGNES TELEGRAPHIQUES ET TELEPHONIQUES le 18 février 1977, est assurée par l'intermédiaire d'éléments constituant des guides pour les fibres optiques. Ces guides sont des capillaires élastiques et appuient par une extrémité effilée au fond de chaque rainure; ils sont maintenus solidaires d'une monture légère et entraînés sans frottement en rotation par la structure rainurée, ces guides faisant un angle inférieur à 45 degrés avec la direction du défilement. Dans certaines lignes de fabrication, la pose se fait à partir d'outils fixes sur une âme tournante. Dans d'autres, la structure rainurée défile en translation et le poste de pose est tournant. L'utilisation de guides élastiques pénétrant dans les rainures permet un guidage efficace de la fibre sans tension. L'absence de frottement entre la monture des guides et un support fixe permet à l'ensemble guides-monture de suivre les éventuelles rotations du support et les irrégularités des rainures sans qu'aucun effort ne s'exerce sur les fibres, ce qui permet d'effectuer la pose dans des conditions industrielles. L'élasticité des guides permet en outre d'utiliser un même outil pour différentes structures de dimensions voisines et permet de réduire la précision en dimension imposée lors de la fabrication de la structure rainurée à une valeur compatible avec une production industrielle.

Il est connu du brevet US 4 154 049 de disposer des fibres dans des rainures à pas hélicoïdal alterné, uniquement, à partir de réserves de fibres fixes.

Il est décrit dans la demande de brevet français n° 2 418 940 au nom de la Société LIGNES TELEGRAPHIQUES ET TELEPHONIQUES, notamment sur la figure 7, une tête de pose dont la position par rapport au support du câble est asservie par un dispositif optique comportant une source lumineuse coopérant avec un capteur, par l'intermédiaire d'un conduit optique traversant la tête de pose. La tête est supportée par un bâti fixe par l'intermédiaire d'un couplage permettant la rotation.

La présente invention a essentiellement pour objet une variante de montage de la tête de pose, permettant de contrôler la rotation d'un plateau portant les réserves de fibres à partir de la tête, en reliant mécaniquement la tête audit plateau par un couplage permettant une rotation relative.

Plus précisément, la présente invention a pour objet un dispositif de fabrication d'éléments de câblage comportant des fibres optiques, assurant la pose simultanée de plusieurs fibres optiques dans plusieurs rainures hélicoïdales à pas simple d'un support cylindrique défilant en continu à travers une ouverture usinée dans une tête de pose comportant un ensemble de guides de fibres constitués par des tubes métalliques creux élastiques terminés à l'une de leurs extrémités par un biseau, reposant inclinés sous pression au fond desdites rainures, caractérisé en ce que la tête est solidaire d'un plateau portant les réserves de fibres tournant à une vitesse correspondant à la valeur théorique du rapport de la vitesse de défilement axial du support par le pas des rainures hélicoïdales, par l'intermédiaire d'un dispositif d'accouplement mécanique placé sur la liaison mécanique entre la tête et le plateau, ce dispositif d'accouplement permettant à la tête de tourner par rapport au plateau de façon à compenser par une rotation relative de la tête les écarts de vitesse de rotation résultant des fluctuations éventuelles du pas des rainures autour de leur valeur nominale.

L'avantage principal de la présente invention réside en ce que le plateau portant les réserves de fibre et la tête de pose constituent un ensemble mécanique dont la rotation est contrôlée par les rainures du support de câble lui-même par l'intermédiaire des guides élastiques des fibres y pénétrant. Cela permet une meilleure adaptation de la position de la tête par rapport au support, compte tenu des fluctuations éventuelles de pas des rainures autour de la valeur nominale.

En effet, dans la structure de la demande de brevet français n° 2 418 940 précitée, la tête tourne à la vitesse définie par le pas des rainures (hélicoïdales ou à pas alterné) par rapport à sa monture. Dans la structure de la présente invention, la tête étant solidaire du plateau, seuls les écarts de vitesse de rotation résultant des variations de pas sont à compenser par rotation de la tête.

Un autre avantage de la structure selon l'invention consiste en ce qu'il devient possible de définir la température du support de câble au point de pose avec une meilleure précision. La différence des dilatations du support et des fibres peut être alors utilisée pour distribuer le long du câble un excès de longueur de fibre par rapport au support, qui augmente l'insensibilité du câble vis-à-vis des déformations auxquelles il peut être soumis, notamment au cours du stockage sur touret ou de la pose.

Les avantages suivants sont également apportés par l'invention:

— la liberté de déplacement de la tête de pose est assurée par un roulement disposé entre un axe et un plateau: les frottements sont donc pratiquement constants et permettent de réaliser une monture des guides de fibres facilitant les manipulations. En particulier, les dimensions de la monture peuvent être augmentées sans influence sur les frottements entre les capillaires et les rainures. Cela permet d'utiliser des guides de fibres de plus grande dimension, ce qui diminue les risques de blessure de la fibre et d'associer aux guides de pièces auxiliaires facilitant l'introduction et améliorant le guidage des fibres;

— la monture des guides de fibres se trouver dégagée de toute pièce support et l'accessibilité aux guides est accrue, ce qui améliore les conditions d'exploitation de la machine.

L'invention sera bien comprise en se reportant à la description suivante et aux figures qui l'accompagnent, données à titre d'exemple non limitatif et dans lesquelles:

— la figure 1 est un schéma du poste de pose de fibres utilisant le dispositif de l'invention;

— la figure 2 est une vue en élévation de la tête de pose;

— la figure 3 est une vue en coupe longitudinale de la tête de pose et de son support.

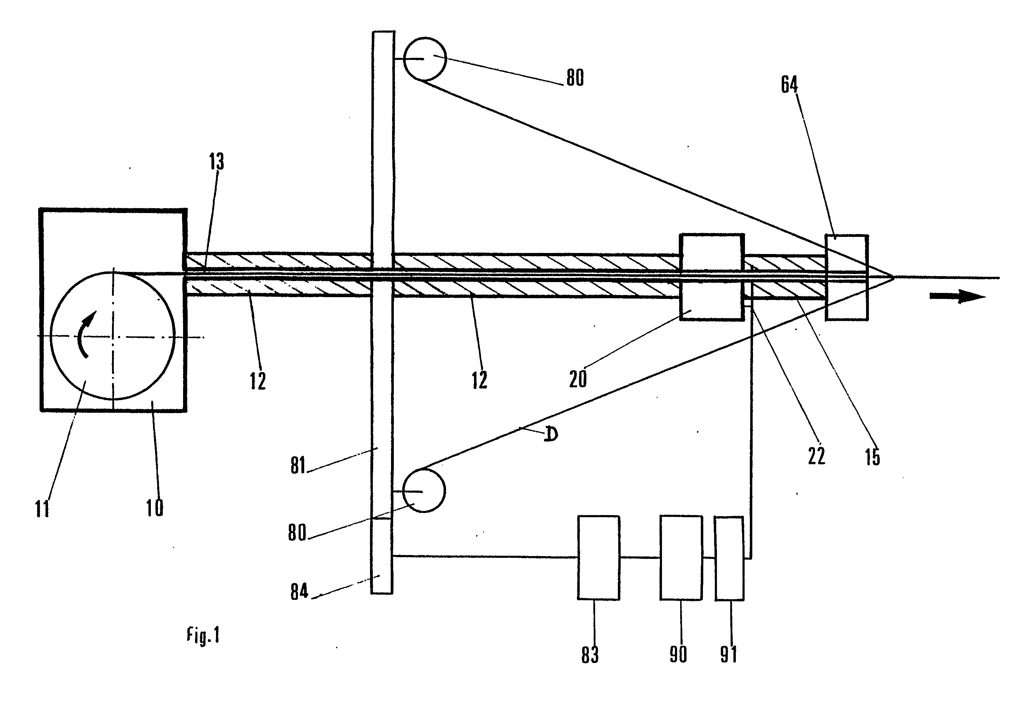

Sur la figure 1, on a représenté en 81 un plateau supportant des réserves 80 de fibres D, alimentant les guides de fibres d'une tête de pose 64. On a représenté en 84 un dispositif d'entraînement en rotation du plateau 81 par l'intermédiaire d'un moteur 83. On a figuré en 15 un axe solidaire de la tête 64 et d'un dispositif d'accouplement 20 permettant à l'axe de tourner par rapport à une conduite rigide 12 solidaire du plateau 81. Un support de câble 13, sur lequel sont placées les fibres optiques issues des réserves 80, est fourni par une réserve 11 disposée à l'intérieur d'une enceinte chauffée 10 se prolongeant jusqu'au plateau 81 par la conduite 12, calorifugée. Le fait de chauffer le support de câble 13 facilite la mise en place des fibres, comme exposé dans la demande de brevet français n° 2 388 930 au nom de la Société LIGNES TELEGRAPHIQUES ET TELEPHONIQUES (page 4, lignes 15—21). Le support 13 et la conduite 12 traversent le plateau 81. Le dispositif d'accouplement 20 permettant la rotation et l'axe 15 sont également calorifugés jusqu'à la tête de pose 64. On a figuré d'une façon schématique en 22 un capteur sensible à la rotation entre l'ensemble 15 et 64 et le dispositif d'accouplement 20. Ce capteur définit à la fois la vitesse de rotation relative et la position angulaire de 64 par rapport à une position de référence, solidaire du plateau 81. Ces indications sont utilisées dans deux dispositifs de commande du moteur 83, représentés respectivement en 90 et 91, permettant de contrôler la vitesse de rotation du plateau 81 et la position angulaire du plateau 81 par rapport à 64.

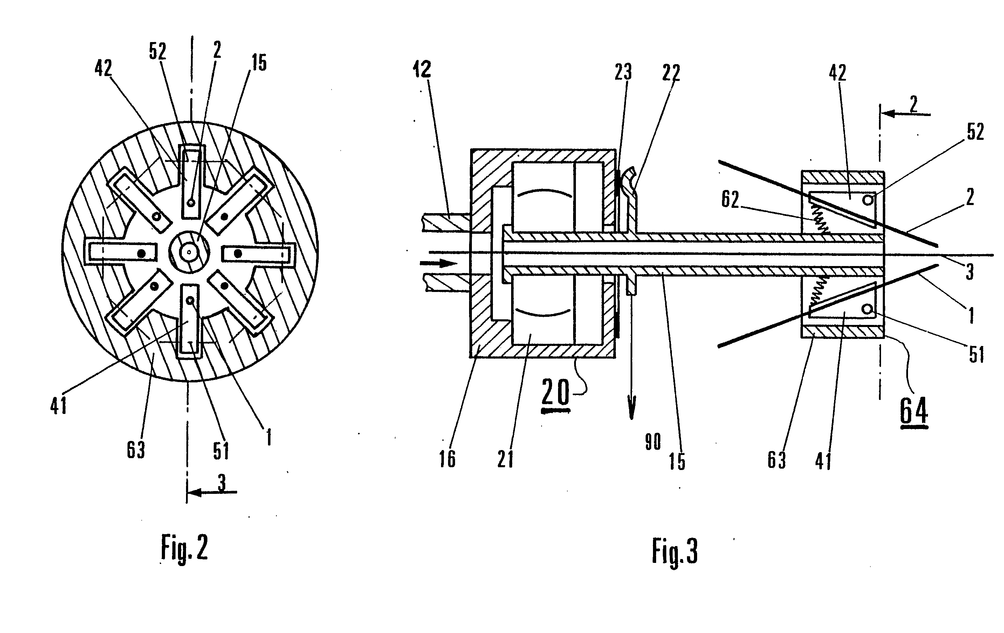

Les figures 2 et 3 représentent une réalisation particulière de l'ensemble constitué par la tête 64, son dispositif d'accouplement 20 et le capteur 22.

La figure 2 représente en élévation une tête de pose analogue à celle représentée sur les figures 5 et 6 de la demande de brevet 78-05833 précitée.

Ainsi qu'il apparaît, chacun des guides de fibres tels 1, 2 est solidaire d'une monture parallélépipédique 41, 42, etc. Ces montures sont distribuées régulièrement autour d'un cylindre creux 15 servant de guide au support de fibres optiques. Ces montures sont fixées par un axe 51, 52, etc. à un bâti fixe, ce qui permet de définir indépendamment l'inclinaison de chacun des guides-fibres sur l'axe de l'ouverture centrale du cylindre 15. Un ressort de rappel 61, 62, etc. crée le couple antagoniste nécessaire au retour de la monture associée en position lorsque celle-ci est amenée à pivoter autour de son axe fixe 51, 52, etc. sous l'action par exemple d'une poussée exercée sur l'extrémité du guide de fibre. Les montures individuelles 41, 42, etc. sont mises en place dans une couronne 63 portant sur sa face interne les logements destinés à abriter lesdites montures individuelles.

La couronne 63 est solidaire de l'axe 15 associé au dispositif d'accouplement 20 comportant un roulement à aiguille 21 ou tout autre dispositif permettant la rotation de l'ensemble 64-15 dans le dispositif d'accouplement 20. Celui-ci est solidaire de la conduite 12, elle-même solidaire du plateau 81 de la figure 1.

Le capteur 22 est représenté sous la forme d'un curseur solidaire de l'axe creux 15 se déplaçant sur une piste conductrice 23 déposée sur la partie du dispositif d'accouplement 20 solidaire du plateau 81 par la conduite 12. Une source de tension non représentée, permet d'obtenir entre le curseur 22 et la masse, une tension de commande des circuits d'asservissement 90 et 91. Par exemple la piste 23 peut être constituée par un anneau interrompu suivant un rayon servant à définir une origine pour le repérage des positions angulaires relatives du curseur, c'est-à-dire du plateau 81, par rapport à la tête de pose 64. Il est bien entendu que cet exemple est donné à titre d'illustration, de nombreux dispositifs connus permettent le repérage angulaire désiré.

## Revendications

1. Dispositif de fabrication d'éléments de câblage comportant des fibres optiques, assurant la pose simultanée de plusieurs fibres optiques dans plusieurs rainures hélicoïdales à pas simple d'un support (13) cylindrique défilant en continu à travers une ouverture usinée dans une tête de pose (64) comportant un ensemble de guides (1, 2) de fibres (D) constitués par des tubes métalliques creux élastiques terminés à l'une de leurs extrémités par un biseau, reposant inclinés sous pression au fond desdites rainures, caractérisé en ce que la tête (64) est solidaire d'un plateau (81) portant les réserves de fibres (D) tournant à une vitesse correspondant à la valeur théorique du rapport de la vitesse de défilement axial du support (13) par le pas des rainures hélicoïdales, par l'intermédiaire d'un dispositif d'accouplement mécanique (20) placé sur la liaison mécanique (15, 16) entre la tête (64) et le plateau (81), ce dispositif d'accouplement permettant à la tête (64) de tourner par rapport au plateau (81) de façon à compenser par une rotation relative de la tête (64) les écarts de vitesse de rotation résultant des fluctuations éventuelles du pas des rainures autour de leur valeur nominale.

2. Dispositif selon la revendication 1, caractérisé en ce que le support (13) est porté à une température supérieure à l'ambiante et parcourt le dispositif dans un conduit (12) isolé thermiquement.

3. Dispositif selon l'une des revendications 1 ou 2, caractérisé en ce qu'il comporte de plus des moyens (22) pour capter la vitesse de rotation et la position angulaire de la tête (64) par rapport au plateau (81), des moyens (83) d'entraînement du plateau (81), et des moyens (90, 91) de commande des moyens d'entraînement (83), recevant les informations fournies par les moyens de captation (22).

## Patentansprüche

1. Vorrichtung zur Herstellung von optische Fasern enthaltenden Verkabelungselementen, welche das gleichzeitige Einlegen von mehreren optischen Fasern in mehrere eingängige schraubenförmige Rillen eines zylindrischen Trägers (13) gewährleistet, der kontinuierlich durch eine Öffnung durchläuft, die in einen Einlegekopf (64) eingearbeitet ist, welcher eine Gruppe von Führungen (1, 2) für Fasern (D) umfaßt, die durch hohle elastische Metallrohre gebildet sind, welche an einem ihrer Enden in einer Abschrägung ausmünden und unter Druckeinwirkung geneigt am Boden der Rillen anliegen, dadurch gekennzeichnet, daß der Kopf (64) fest verbunden ist mit einer Platte (81), welche den Vorrat an Fasern (D) trägt und mit einer Geschwindigkeit rotiert, die dem theoretischen Wert des Verhältnisses der axialen Durchlaufgeschwindigkeit des Trägers (13) zur Ganghöhe der schraubenförmigen Rillen entspricht, über eine mechanische Kopplungsvorrichtung (20), die an der mechanischen Verbindung (15, 16) zwischen dem Kopf (64) und der Platte (81) angeordnet ist, wobei diese Kopplungsvorrichtung es dem Kopf (64) ermöglicht, in bezug auf die Platte (81) derart verdreht zu werden, daß durch eine Relativdrehung des Kopfes (64) die Rotationsgeschwindigkeitsabweichungen kompensiert werden, die sich aus eventuellen Schwankungen der Ganghöhe der Rillen um ihren Nennwert ergeben.

2. Vorrichtung nach Anspruch 1, dadurch gekennzeichnet, daß der Träger (13) auf eine die Umgebungstemperatur überschreitende Temperatur gebracht ist und die Vorrichtung in einer thermisch isolierten Führung (12) durchläuft.

3. Vorrichtung nach Anspruch 1 oder 2, dadurch gekennzeichnet, daß sie ferner Mittel (22) umfaßt, um die Rotationsgeschwindigkeit und die Winkelposition des Kopfes (64) in bezug auf die Platte (81) zu erfassen, Mittel (83) zum Antreiben der Platte (81) und Mittel (90, 91) zur Steuerung der Antriebsmittel (83) umfaßt, welche die von den Erfassungsmitteln (22) gelieferten Informationen empfangen.

## Claims

1. Device for producing cabling members comprising optical fibers, assuring the simultaneous introduction of a plurality of optical fibers into a plurality of single-flighted helical grooves of a cylindrical carrier (13) continuously passing through an opening machined into an insertion head (64) comprising a set of fiber (D) guides (1, 2) formed by hollow resilient metal tubes terminating in tapered manner at one of their ends, and urged in an inclined position against the bottom of said grooves, characterized in that the head (64) is joined with a plate (81) carrying the fiber (D) supply and rotating at a speed corresponding to the theoretical value of the ratio of the axial running speed of the carrier (13) to the pitch of the helical grooves, through a mechanical coupling device (20) located on the mechanical connection (15, 16) between the head (64) and the plate (81), this coupling device allowing the head (64) to rotate with respect to the plate (81) in a manner to compensate, by a relative rotation of the head (64), for the rotational speed shifts resulting from eventual fluctuations of the pitch of the grooves about its nominal value.

2. Device according to claim 1, characterized in that the carrier (13) is heated to a temperature exceeding the ambient temperature and passes through the device inside a guide (12) which is thermally insulated.

3. Device according to any of claims 1 or 2, characterized in that it further comprises means (22) for detecting the rotational speed and the angular position of the head (64) with respect to the plate (81), means (83) for driving the plate (81) and means (90, 91) for controlling the driving means (83) and receiving the information supplied by the detection means (22).

Fig. 1

0 020 189

Fig. 2

Fig. 3

0020 189